# EUROPÄISCHE PATENTSCHRIFT

(11) **EP 3 841 042 B1**
(45) Veröffentlichungstag und Bekanntmachung des Hinweises auf die Patenterteilung: **12.10.2022**
(21) Anmeldenummer: 19758673.8
(22) Anmeldetag: 20.08.2019
(51) Int. Cl.: B65G 49/06

(54) **SHUTTLE ZUM VERFAHREN VON GLASTAFELN UND SPEICHERVORRICHTUNG MIT ZUMINDEST EINEM DERARTIGEN SHUTTLE**
SHUTTLE FOR MOVING GLASS PANES, AND STORAGE DEVICE COMPRISING AT LEAST ONE SHUTTLE OF SAID TYPE
NAVETTE POUR LE DÉPLACEMENT DE PLAQUES DE VERRE ET DISPOSITIF DE STOCKAGE COMPRENANT AU MOINS UNE TELLE NAVETTE

(30) Priorität: 21.08.2018 DE 102018214131
(43) Veröffentlichungstag der Anmeldung: 30.06.2021
(73) Patentinhaber: HEGLA GmbH & Co. KG, 37688 Beverungen (DE)
(72) Erfinder: HÖTGER, Bernhard, 37697 Lauenförde (DE); SCHOISSWOHL, Markus, 1160 Wien (AT)
(74) Vertreter: Dr. Solf & Zapf Patent- und Rechtsanwalts PartG mbB
(86) Internationale Anmeldenummer: PCT/EP2019/072270
(87) Internationale Veröffentlichungsnummer: WO 2020/038945

(56) Entgegenhaltungen:
- EP-A2- 1 323 651
- WO-A1-2018/010942

## Beschreibung

Die vorliegende Erfindung betrifft ein Shuttle zum Verfahren von plattenförmigen Elementen, vorzugsweise von Glastafeln, sowie eine Speichervorrichtung zum Speichern von plattenförmigen Elementen, vorzugsweise von Glastafeln, mit zumindest einem derartigen Shuttle.

Als Flachglas wird jedes Glas in Form von Glastafeln bezeichnet, unabhängig vom angewandten Herstellungsverfahren, Dimension und Form und Veredelung.

Bei Verbundglastafeln handelt es sich um ein Laminat aus mindestens zwei einzelnen Glasscheiben, die jeweils mittels einer klebfähigen Zwischenschicht aus Kunststoff, insbesondere durch eine hochreißfeste, zähelastische, thermoplastische Folie, miteinander verbunden sind.

Einscheiben-Sicherheitsglastafeln (ESG) bestehen aus einer einzigen, speziell wärmebehandelten Glasscheibe. Die Glasscheibe wird auf Temperaturen oberhalb ihrer Transformationstemperatur erhitzt und danach schlagartig wieder abgekühlt, so dass eine Vorspannung in der Glasscheibe entsteht. Vorzugsweise erfolgt die Wärmebehandlung gemäß DIN EN 12150-1:2015-12. Einscheiben-Sicherheitsglas hat aufgrund der Vorspannung eine erhöhte Stoß- und Schlagfestigkeit im Vergleich zu normalen Flachglastafeln.

Für ihre spätere Verwendung müssen die Glastafeln in der Regel zugeschnitten werden. Dazu werden insbesondere Glasrohtafeln in einzelne Glastafelzuschnitte zerteilt. Dies erfolgt in an sich bekannten Schneidanlagen. Nach dem Schneiden werden die Glastafelzuschnitte bzw. die geschnittenen Glastafeln vorzugsweise in einer Weiterbearbeitungsanlage, beispielsweise einer Isolierglaslinie, einer Bearbeitungsanlage, z.B. einer Anlage zur Kantenbearbeitung, oder einer Tempervorrichtung, weiter bearbeitet.

Während des gesamten Herstellprozesses, insbesondere vor und/oder nach dem Schneiden werden die Glastafeln in an sich bekannter Weise sortiert und zwischengespeichert. Das Zwischenspeichern erfolgt in entsprechenden Speichereinrichtungen. In der Regel unterscheidet man zwischen vertikalen und horizontalen Speichereinrichtungen. In den horizontalen Speichereinrichtungen werden die Glastafeln liegend bzw. horizontal gespeichert. In den vertikalen Speichereinrichtungen werden die Glastafeln aufrecht, das heißt vertikal oder etwas zur Vertikalen geneigt, gespeichert. Sie stehen in diesem Fall auf einer ihrer Glaskanten. Dabei können die Glastafeln beispielsweise um einen Winkel von bis zu 6° zur Vertikalen geneigt sein. Bei den erfindungsgemäßen Speichereinrichtungen handelt es sich in diesem Sinne um vertikale Speichereinrichtungen.

Die EP 1 323 651 A2 offenbart ein Verfahren zum Sortieren von Glastafeln, wobei die Glastafeln eines Fertigungslaufs von einer Bearbeitungslinie sortierend in Speichereinrichtungen oder Weiterverarbeitungslinien eingeschleust werden, wobei eine Zwischenspeicher- und Sortiereinrichtung verwendet wird, die mit den Glastafeln eines Fertigungslaufs insbesondere kontinuierlich beschickt wird und die Glastafeln sortierend zuordnend in Speichereinrichtungen oder Weiterbearbeitungslinien einschleust. Zudem offenbart die EP 1 323 651 A2 ein entlang einer festen Verfahrbahn hin- und her verfahrbares, einstöckiges Shuttle zum Einsortieren und/oder zur Entnahme der Glastafeln in bzw. aus einem vertikalen Zwischenspeicher.

Die WO 2018/010942 A1 offenbart eine Fördervorrichtung zum Fördern von vertikal ausgerichteten Flachglasscheiben, die in einer im wesentlichen lotrechten Förderebene verbleibend aus einem ersten Förderweg quer zur Förderrichtung in einen weiteren Förderweg angehoben werden und quer zur Förderrichtung in den ersten Förderweg abgesenkt werden. Dabei werden die Flachglasscheiben mit voneinander unterschiedlichen Geschwindigkeiten bewegt und wenigstens eine Flachglasscheibe wird in einem Bereich, der im ersten Förderweg liegt, bearbeitet.

Aufgabe der vorliegenden Erfindung ist die Bereitstellung eines Shuttles für eine Speichervorrichtung zum Speichern plattenförmigen Elementen, bevorzugt von, insbesondere geschnittenen, Glastafeln, das einen hohen Durchsatz gewährleistet.

Weitere Aufgabe der vorliegenden Erfindung ist die Bereitstellung einer Speichervorrichtung zum Speichern von plattenförmigen Elementen, bevorzugt von, insbesondere geschnittenen, Glastafeln, die einfach und vor allem eine hohe Füllmenge bei geringem Platzbedarf ermöglicht und einen hohen Durchsatz und einen hohen Füllgrad gewährleistet. Zudem soll die Speichervorrichtung gewährleisten, dass die Sortierung unterstützt wird, um die gewünschte Umsortierung durch weniger Shuttlebewegungen zu erreichen und damit die effiziente Nutzung der Shuttles zu erhöhen.

Diese Aufgaben werden durch ein Shuttle gemäß Anspruch 1 und eine Speichervorrichtung gemäß Anspruch 6 gelöst. Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Eine schematische Draufsicht auf eine erfindungsgemäße Speichervorrichtung
- Figur 2:: Schematisch eine Seitenansicht einer ersten Einlaufstrecke
- Figur 3:: Schematisch eine Seitenansicht einer ersten Auslaufstrecke
- Figur 4:: Schematisch eine Seitenansicht einer Transport- und Hubvorrichtung gemäß einer weiteren Ausführungsform
- Figur 5:: Schematisch eine Seitenansicht einer Transport- und Hubvorrichtung gemäß einer weiteren Ausführungsform

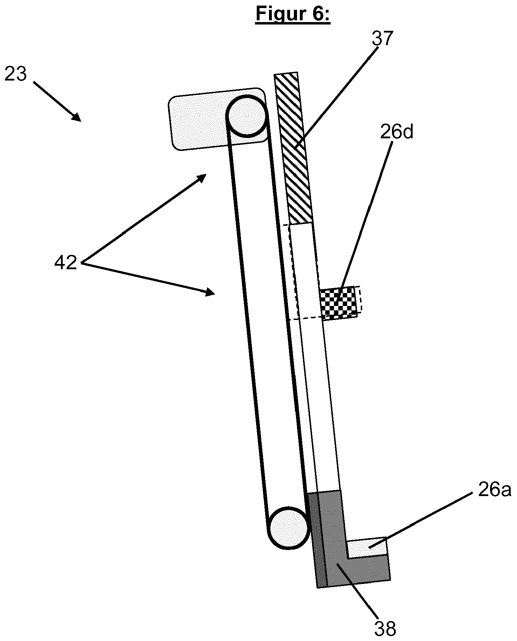

- Figur 6:: Schematisch einen Längsschnitt der Transport- und Hubvorrichtung gemäß Figur 5

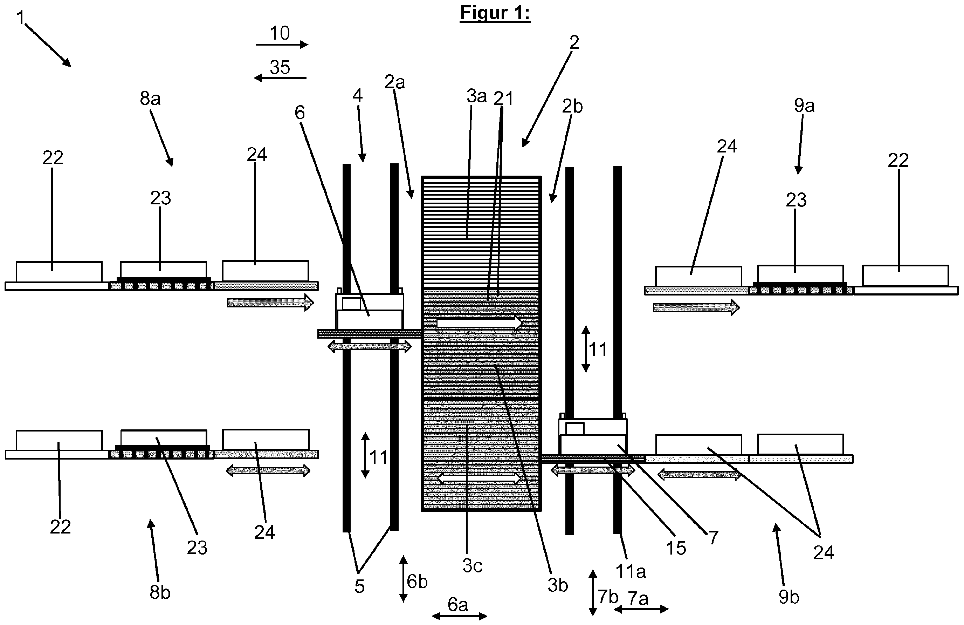

Die erfindungsgemäße Speichervorrichtung 1 (Fig. 1) weist eine Speicheranordnung 2 mit mehreren ortsfesten, nebeneinander angeordneten, vertikalen Speichereinrichtungen 3a;3b;3c, mindestens ein erstes Shuttle bzw. Einlaufshuttle 6, mindestens ein zweites Shuttle bzw. Auslaufshuttle 7 sowie eine erste und zweite Einlaufstrecke 8a;b und eine erste und zweite Auslaufstrecke 9a;b auf.

Die Speicheranordnung 2 weist in eine horizontale Hauptförderrichtung bzw. erste Förderrichtung 10 gesehen eine erste Seite bzw. Einlaufseite 2a und eine zweite Seite bzw. Auslaufseite 2b auf. Die drei Speichereinrichtungen 3a;3b:3c sind in eine zur Hauptförderrichtung 10 senkrechte, horizontale Shuttleförderrichtung 11 gesehen nebeneinander bzw. zueinander benachbart angeordnet.

Das Einlaufshuttle 6 ist der Speicheranordnung 2 in Hauptförderrichtung 10 gesehen vorgeordnet. Es ist somit an der Einlaufseite 2a der Speicheranordnung 2 angeordnet.

Das Auslaufshuttle 7 ist der Speicheranordnung 2 in Hauptförderrichtung 10 gesehen nachgeordnet. Es ist somit an der Auslaufseite 2b der Speicheranordnung 2 angeordnet.

Zudem sind die beiden Shuttle 6;7 jeweils in die horizontale, zur Hauptförderrichtung 10 senkrechte Shuttleförderrichtung 11 entlang einer fest vorgegebenen Verfahrbahn 4, bevorzugt auf Schienen 5, automatisiert linear hin- und her verfahrbar. Zum Verfahren der Shuttle 6;7 sind vorzugsweise entsprechende Antriebs- und Steuermittel vorhanden. Vorzugsweise weisen die Shuttle 6;7 jeweils einen Antriebsmotor und eine Steuereinrichtung auf. Bei dem Antriebsmotor handelt es sich vorzugsweise um einen Linearmotor. Der Antrieb kann aber auch über einen Rotationsmotor in Kombination mit einem Ritzel und einer Zahnstange erfolgen. Auch kann der Antrieb über einen Zahnriemen und einen ortsfesten Antriebsmotor erfolgen. Auch kann die Steuereinrichtung ortsfest sein und mit dem jeweiligen Shuttle 6;7 in Signal übertragender Weise verbunden sein.

Die beiden Shuttle 6;7 weisen zudem jeweils eine zur Hauptförderrichtung 10 parallele Shuttlelängsrichtung 6a;7a, eine zur Shuttleförderrichtung 11 parallele Shuttlebreitenrichtung 6b;7b sowie eine vertikale Shuttlehöhenrichtung 6c;7c auf.

Erfindungsgemäß sind nun das Einlaufshuttle 6 und das Auslaufshuttle 7 jeweils doppelstöckig bzw. zweistöckig ausgebildet. Es handelt sich somit jeweils um ein Doppelstockshuttle. Das heißt, die beiden Shuttle 6;7 weisen jeweils zwei übereinander angeordnete Stockwerke bzw. Ebenen 12;13 auf, in denen vertikale Glastafeln 14 übereinander aufgenommen werden können.

Jedes Stockwerk 12;13 weist dabei zumindest ein Fach 15 zur Aufnahme mindestens einer Glastafel 14 auf. In jedem Fach 15 kann, z.B. je nach Länge der Glastafel 14, jeweils lediglich eine einzige Glastafel 14 aufgenommen werden oder es können mehrere, in Shuttlelängsrichtung 6a;7a hintereinander angeordnete Glastafeln 14 aufgenommen werden. Die Glastafeln 14 sind dabei in dem Shuttle 6;7 jeweils vertikal oder im Wesentlichen vertikal ausgerichtet. Im Wesentlichen vertikal meint, dass die Glastafeln 14 relativ zur Vertikalen bzw. zur Shuttlehöhenrichtung 6c;7c ausgelenkt sein können. Sie stehen aber in jedem Fall aufrecht auf einer ihrer Glastafelkanten 16, sind also nicht liegend angeordnet.

Sind pro Stockwerk 12;13 mehrere Fächer 15 vorhanden (nicht dargestellt), sind diese in Shuttlebreitenrichtung 6b;7b nebeneinander angeordnet. Die einzelnen Fächer 15 sind dann zudem durch an sich bekannte Fachteilerelemente, z.B. Trennwände oder Drähte, voneinander getrennt bzw. abgeteilt. Die Shuttle 6;7 weisen dabei pro Stockwerk 12;13 vorzugsweise lediglich ein einziges Fach 15 oder zwei Fächer 15 auf, höchstens jedoch vorzugsweise 5, bevorzugt höchstens 4, Fächer 15.

Des Weiteren sind die Fächer 15 der beiden Stockwerke 12;13 jeweils in Shuttlehöhenrichtung 6c;7c vorzugsweise paarweise zueinander fluchtend ausgebildet. Bzw. gehen die Fächer 15 der beiden Stockwerke 12;13 ineinander über.

Zur Aufnahme der Glastafeln 14, insbesondere der unteren Glastafelkante 16, weisen die Shuttle 6;7 vorzugsweise eine obere und untere Rollenbahn 17;18 mit Transportrollen 19a;b auf. Die einzelnen Transportrollen 19a;b einer Rollenbahn 17;18 sind in Shuttlelängsrichtung 6a;7a hintereinander angeordnet. Die beiden Rollenbahnen 17;18 sind übereinander angeordnet. Pro Stockwerk 12;13 ist somit eine Rollenbahn 17;18 vorhanden. Die obere Rollenbahn 18 trennt die beiden Stockwerke 12;13 voneinander. Vorzugsweise handelt es sich bei den Transportrollen 19a;b zudem in an sich bekannter Weise zumindest teilweise um mit geeigneten Antriebsmitteln angetriebene Transportrollen 19a;b. Angetrieben meint, dass die Transportrollen 19a;b um ihre Rollenachse angetrieben werden, also gedreht werden.

Dabei sind die Transportrollen 19b der oberen Rollenbahn 18 vorzugsweise in einer Wand 20 des jeweiligen Shuttles 6;7 versenkbar bzw. bei mehrfächriger Ausführung aus dem Fachbereich ausfahrbar. Hierzu sind entsprechende Antriebsmittel vorhanden. Sind die Transportrollen 19b in ihrer versenkten Position, oder aus dem Fachbereich ausgefahren, bilden somit die jeweils beiden übereinander angeordneten Fächer 15 der beiden Stockwerke 12;13 ein durchgehendes Fach, in dem eine Glastafel 14 aufgenommen werden kann, die höher als das untere Stockwerk 12 ist.

Analog zu den beiden erfindungsgemäßen doppelstöckigen Shuttles 6;7 ist zumindest eine der Speichereinrichtungen 3a;3b;3c ebenfalls doppelstöckig ausgebildet und weist zwei übereinander angeordnete Stockwerke bzw. Speicherebenen auf. Beispielsweise ist die erste Speichereinrichtung 3a einstöckig ausgebildet und die zweite und dritte Speichereinrichtung 3b;3b sind zweistöckig ausgebildet.

Pro Speicherebene bzw. Stockwerk weisen die Speichereinrichtungen 3a;3b;3c dabei jeweils mehrere in Shuttleförderrichtung 11 zueinander benachbarte Fächer 21 zur Aufnahme zumindest einer Glastafel 14 auf. Die einzelnen Fächer 21 sind durch an sich bekannte Fachteilerelemente, z.B. Trennwände oder Drähte, voneinander getrennt bzw. abgeteilt. Vorzugsweise weisen die Speichereinrichtungen 3a;3b;3c mindestens pro Speicherebene bzw. Stockwerk mindestens 30 Fächer 21 auf.

Des Weiteren weisen die Speichereinrichtungen 3a;3b;3c analog zu den Shuttles 6;7 pro Speicherebene bzw. Stockwerk jeweils eine Rollenbahn mit Transportrollen zur Aufnahme der Glastafeln 14 auf. Die Transportrollen können ebenfalls zumindest teilweise angetrieben sein. Zudem trennt analog wie bei den Shuttles 6;7 die obere Rollenbahn die beiden Stockwerke voneinander.

Die Speichereinrichtungen 3a;3b;3c sind zudem jeweils zur Einlaufseite 2a und zur Auslaufseite 2b hin offen, so dass die Glastafeln 14 durch die Speichereinrichtungen 3a;3b;3c in Hauptförderrichtung 10 durchgefördert werden können.

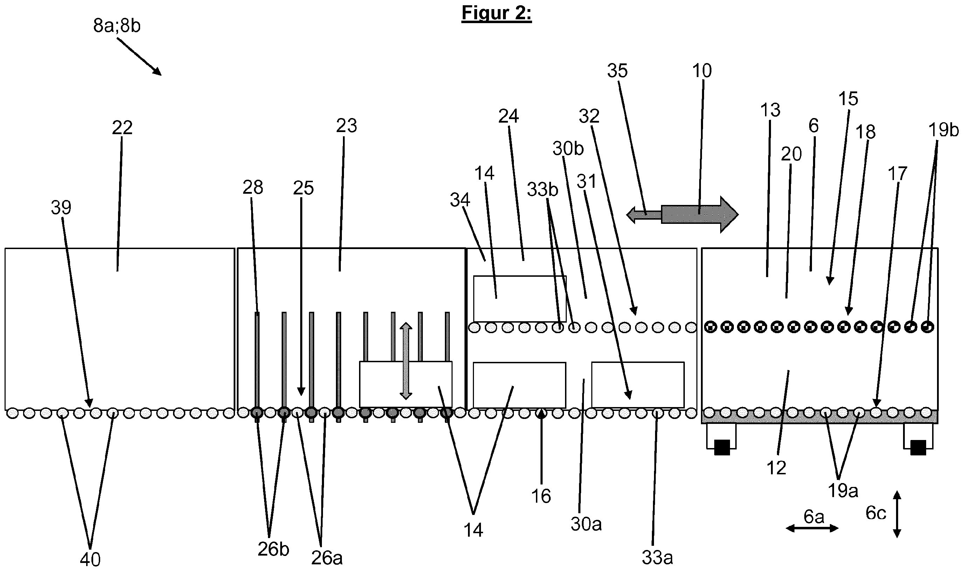

Die dem Einlaufshuttle 6 in Hauptförderrichtung 10 gesehen vorgeordneten beiden Einlaufstrecken 8a;b (Fig. 1 und 2) weisen jeweils eine einstöckige Transportvorrichtung 22, eine dieser in Hauptförderrichtung 10 nachgeordnete Transport- und Hubeinrichtung 23 und eine dieser in Hauptförderrichtung 10 nachgeordnete Speicherstrecke 24 auf.

Die einstöckige Transportvorrichtung 22 dient zum Transport der Glastafeln 14 in die Hauptförderrichtung 10 und ist in an sich bekannter Weise ausgebildet. Beispielsweise weist sie eine horizontale Rollenbahn 39 mit zumindest teilweise angetriebenen Transportrollen 40 zum Transport der Glastafeln 14 auf.

Die Transport- und Hubeinrichtung 23 weist ebenfalls eine untere, horizontale Rollenbahn 25 mit ortfesten Transportrollen 26a auf, die zumindest teilweise angetrieben sind. Die ortsfesten Transportrollen 26a sind in Hauptförderrichtung 10 hintereinander angeordnet. Zudem weist die Transport- und Hubeinrichtung 23 anhebbare Transportrollen 26b auf, die ebenfalls zumindest teilweise angetrieben sind. In einer nicht angehobenen Ausgangsstellung sind die anhebbaren Transportrollen 26b Teil der unteren Rollenbahn 25. Sie sind dann in Hauptförderrichtung 10 gesehen zwischen den ortsfesten Transportrollen 26a angeordnet. Vorzugsweise ist dann jeweils eine anhebbare Transportrolle 26b zwischen einer ortsfesten Transportrolle 26a angeordnet.

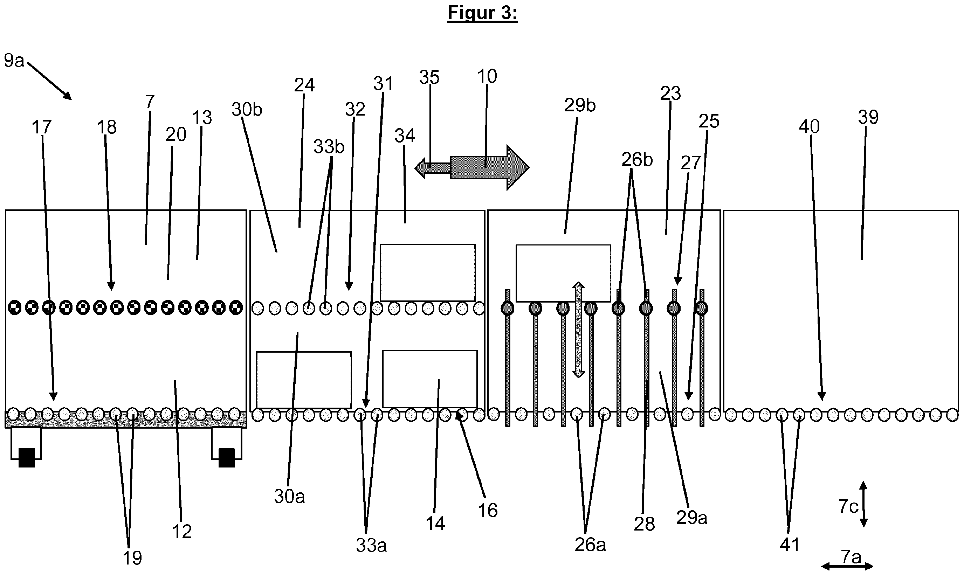

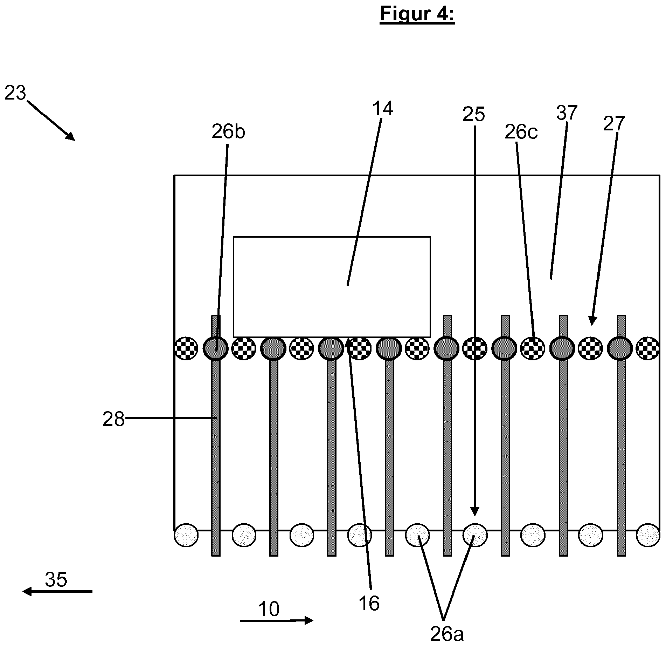

Die anhebbaren Transportrollen 26b sind in vertikaler Richtung anhebbar, so dass eine auf den Transportrollen 26b aufliegende Glastafel 14 mit angehoben wird. Die anhebbaren Transportrollen 26b sind dazu vorzugsweise in vertikalen Schienen 28 geführt. Als Hubmittel ist vorzugsweise ein Hubmotor mit Kopplungsmittel wie Kette, Band, Seil vorgesehen, wobei das Kopplungsmittel mit der geführten Aufhängung der angetriebenen Transportrollen 26b fest verbunden ist. In ihrer oberen, angehobenen Stellung bilden die anhebbaren Transportrollen 26b dann eine obere, horizontale Rollenbahn 27 (Fig. 3;4). In diesem Fall trennt analog wie bei den Shuttles 6;7 die obere Rollenbahn 27 die Transport- und Hubeinrichtung 23 in zwei übereinander angeordnete Stockwerke 29a;29b.

Die Speicherstrecke 24 ist analog zu den beiden erfindungsgemäßen doppelstöckigen Shuttles 6;7 ebenfalls doppelstöckig ausgebildet und weist zwei übereinander angeordnete Stockwerke bzw. Speicherebenen 30a;30b auf. In der Speicherstrecken 24 findet lediglich der Transport der Glastafeln 14 in oder entgegen die Hauptförderrichtung 10 statt, kein Anheben oder Absenken der Glastafeln 14.

Pro Speicherebene bzw. Stockwerk 30a;30b weist die Speicherstrecke 24 dabei jeweils eine horizontale Rollenbahn 31;32 mit Transportrollen 33a;b zur Aufnahme der Glastafeln 14 auf. Die Transportrollen 33a;b sind ebenfalls zumindest teilweise angetrieben. Zudem trennt analog wie bei den Shuttles 6;7 die obere Rollenbahn 32 die beiden Stockwerke 30a;30b voneinander. Außerdem können die Transportrollen 33b der oberen Rollenbahn 32 ebenfalls in einer Wand 34 der Speicherstrecke 24 versenkbar sein, so dass Glastafeln 14 aufgenommen werden können, die höher als das untere Stockwerk 30a sind.

Die erste dem Auslaufshuttle 7 in Hauptförderrichtung 10 gesehen nachgeordnete Auslaufstrecke 9a (Fig. 1 und 3) weist eine Speicherstrecke 24 und eine dieser in Hauptförderrichtung 10 nachgeordnete Transport- und Hubeinrichtung 23 auf sowie eine dieser in Hauptförderrichtung 10 nachgeordnete einstöckige Transportvorrichtung 22 auf.

Die zweite dem Auslaufshuttle 7 in Hauptförderrichtung 10 gesehen nachgeordnete, zu der ersten Auslaufstrecke 9a vorzugsweise parallele, Auslaufstrecke 9b (Fig. 1 und 3) weist zwei in Hauptförderrichtung 10 hintereinander angeordnete doppelstöckige Speicherstrecken 24 auf, bei welchen vorzugsweise die oberen angetriebenen Rollen in der Rückwand versenkbar sind.

Die doppelstöckigen Speicherstrecken 24 und die Transport- und Hubeinrichtung 23 sowie die einstöckige Transportvorrichtung 22 der Auslaufstrecken 9a;b sind analog wie die entsprechenden Vorrichtungen 22-24 der Einlaufstrecken 8a;b ausgebildet.

Gemäß einer weiteren vorteilhaften Ausführungsform der Erfindung (Fig. 4) weist die Transport- und Hubvorrichtung 23 weitere, versenkbare Transportrollen 26c auf. Die Transportrollen 26c sind in einer Wand 37 der Transport- und Hubvorrichtung 23 versenkbar. Zudem sind die versenkbaren Transportrollen 26c oberhalb der ortsfesten Transportrollen 26a und paarweise vertikal fluchtend zu diesen angeordnet. Die versenkbaren Transportrollen 26 bilden mit den anhebbaren Transportrollen 26b in deren oberer Stellung die horizontale Rollenbahn 27.

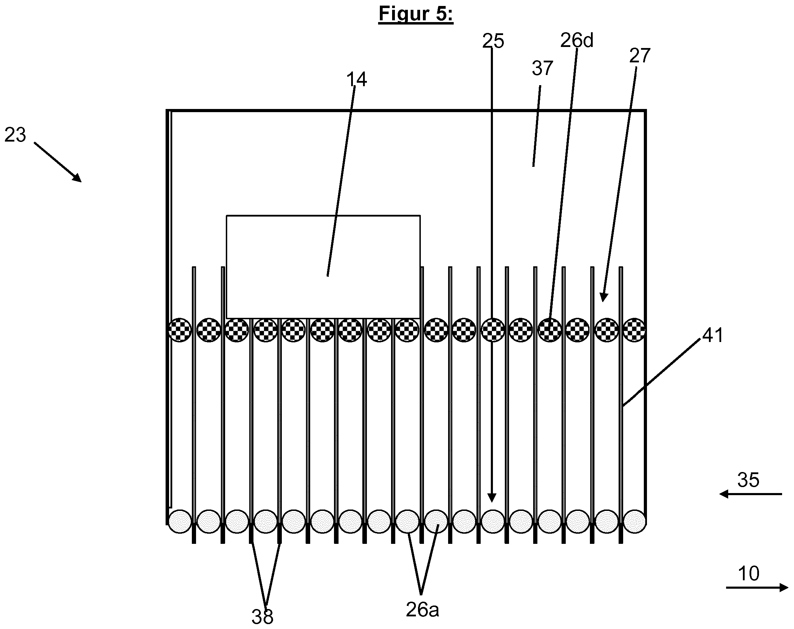

Gemäß einer weiteren vorteilhaften Ausführungsform der Erfindung (Fig. 5) weist die Transport- und Hubvorrichtung 23 statt der anhebbaren Transportrollen 26b, bevorzugt L-förmige, Hubhaken 38 sowie obere, versenkbare Transportrollen 26d auf. Die versenkbaren Transportrollen 26d sind oberhalb der ortsfesten Transportrollen 26a angeordnet und vorzugsweise paarweise vertikal fluchtend zu diesen angeordnet.

Wie auch die anhebbaren Transportrollen 26c sind die Hubhaken 38 mittels vertikaler Führungen 41 vertikal verschiebbar mit der Wand 37 der Transport- und Hubvorrichtung 23 verbunden Zudem sind ebenfalls entsprechende Hubmittel 42 für das Anheben und Absenken der Hubhaken 38 vorhanden. Des Weiteren sind die Hubhaken 38 jeweils zwischen den Transportrollen 26a;26d angeordnet. Die Glastafeln 14 liegen mit ihren unteren Glastafelkanten 16 zu Beginn des Hebens jeweils über den auf Hubhaken 38 und werden mittels dieser angehoben und abgesenkt. Werden die Glastafeln 14 angehoben, sind die versenkbaren Transportrollen 26d zunächst versenkt. Sie werden erst dann ausgefahren, wenn die Glastafeln 14 die versenkten Transportrollen 26d passiert haben. Dann werden die Glastafeln 14 mittels der Hubhaken 38 auf den ausgefahrenen Transportrollen 26d abgesetzt.

Parallel dazu wird der Glastafeltransport in dem unteren Stockwerk 29a fortgeführt, sobald die die Hubhaken 38 das obere Stockwerk 29b erreicht haben und die einzutransportierenden Glastafeln 14 nicht höher als das untere Stockwerk 29a sind.

Beim Absenken der Glastafeln 14 erfolgt alles genau umgekehrt. Das heißt, die Glastafeln 14 werden zunächst mittels der Hubhaken 38 von den ausgefahrenen Transportrollen 26d abgehoben, dann werden die Transportrollen 26d in der Rückwand 37 versenkt und dann beginnt der Transport nach unten.

Das Absenken der Hubhaken 38 ohne Glastafel 14 auf die Aufnahmeposition im unteren Stockwerk 29a passiert, sobald dies vorteilhafterweise die Produktionssequenz nicht negativ beeinflusst und/oder eine Glastafel 14 zum Hubtransport ansteht und noch nicht in die Hubposition eingefahren ist.

Im Folgenden wird nun das mit der erfindungsgemäßen Speichervorrichtung 1 durchführbare Verfahren näher erläutert:
In der ersten Einlaufstrecke 8a werden die Glastafeln 14 zunächst von der einstöckigen Transportvorrichtung 22 in Hauptförderrichtung 10 auf die untere Rollenbahn 25 der Transport- und Hubeinrichtung 23 gefördert. Die Glastafeln 14 stammen beispielsweise von einem vorgelagerten Glastafelzuschnitt also aus einer Schneidanlage, oder von bereits durchgeführten Bearbeitungsschritten an den Glastafeln 14, also aus einer Bearbeitungsanlage, wie beispielsweise einer Anlage zur Kantenbearbeitung, einer Anlage zu Lochbearbeitungen, einer Anlage zum Härten, einer Anlage zum Beschichten, einer Anlage zum Drucken und/oder einer Anlage zum Emaillieren.

Von dort wird ein Teil der Glastafeln 14 in Hauptförderrichtung 10 auf der unteren Rollenbahn 25 durch die Transport- und Hubeinrichtung 23 durch gefördert und in das untere Stockwerk 30a der Speicherstrecke 24 eingefördert.

Der Antrieb bzw. die Förderung der Glastafeln 14 in und entgegen die Hauptförderrichtung 10 erfolgt jeweils mittels der angetriebenen Transportrollen 19a;19b;26a;26b;26c;33a;33b;40 der jeweiligen Vorrichtung 22-24 bzw. der Shuttle 6;7 und/oder der Speichereinrichtungen 3a;3b;3c.

Ein anderer Teil der Glastafeln 14 wird mittels der anhebbaren Transportrollen 26b oder der Hubhaken 38 auf Höhe des oberen Stockwerks 30b der Speicherstrecke 24 angehoben und auf der oberen Rollenbahn 27 in das obere Stockwerk 30b der Speicherstrecke 24 eingefördert.

Durch entsprechende Sequenzierung der Befüllung von oberem und unterem Stockwerk 30a;30b findet bereits eine Vorsortierung der Glastafeln 14 in der ersten Einlaufstrecke 8a statt. Die Speicherstrecke 24 dient dabei als Pufferspeicherstrecke um eine möglichst volle und rasche Beladung des Einlaufshuttles 6 zu gewährleisten.

Die Glastafeln 14 werden dann in Hauptförderrichtung 10 auf der jeweiligen Rollenbahn 31;32 durch die Speicherstrecke 24 durchgefördert.

Von der Speicherstrecke 24 werden die Glastafeln 14 dann in das Einlaufshuttle 6 gefördert. Die sich im oberen Stockwerk 30b der Speicherstrecke 24 befindlichen Glastafeln 14 werden dabei in das obere Stockwerk 13 des Einlaufshuttles 6 befördert und die sich im unteren Stockwerk 30a der Speicherstrecke 24 befindlichen Glastafeln 14 werden in das untere Stockwerk 12 des Einlaufshuttles 6 befördert.

Von dem Einlaufshuttle 6 werden die Glastafeln 14 dann in die jeweilige Speichereinrichtung 3a;3b;3c einsortiert.

Die sich im oberen Stockwerk 13 des Einlaufshuttles 6 befindlichen Glastafeln 14 werden dabei in das obere Stockwerk der jeweiligen Speichereinrichtung 3b;3c befördert und die sich im unteren Stockwerk 12 des Einlaufshuttles 6 befindlichen Glastafeln 14 werden in das untere Stockwerk der jeweiligen zweistöckigen Speichereinrichtung 3b;3b oder in die einstöckige Speichereinrichtung 3a befördert.

In der zweiten Einlaufstrecke 8b ist der Ablauf ähnlich. Allerdings kann vorzugsweise auch zusätzlich eine Übergabe von Glastafeln 14 aus dem Einlaufshuttle 6 an die Speicherstrecke 24 und Übergabe von Glastafeln 14 aus der Speicherstrecke 24 an die Transport-und Hubeinrichtung 23 erfolgen. Die Glastafeln 14 können also auch entgegen die Hauptförderrichtung 10 in eine Nebenförderrichtung bzw. zweite Förderrichtung 35 gefördert werden. Dieser Transport kann aufgrund der Anlagenkonfiguration (Restriktion an Platz bzw. vorhandene Maschine) erforderlich sein, bzw. dient z.B. dem Austransport von speziellen Glastafeln 14 zu definierten Arbeitsgängen.

Die Glastafeln 14 werden aus der jeweiligen Speichereinrichtung 3a;3b;3c in sortierter Reihenfolge auf das Auslaufshuttle 7 befördert. Die sich im oberen Stockwerk der doppelstöckigen Speichereinrichtungen 3b;3c befindlichen Glastafeln 14 werden dabei in das obere Stockwerk 13 des Auslaufshuttles 7 befördert und die sich im unteren Stockwerk der doppelstöckigen Speichereinrichtungen 3b;3c oder in der einstöckigen Speichereinrichtung 3a befindlichen Glastafeln 14 werden in das untere Stockwerk 12 des Auslaufshuttles 7 befördert.

Aus dem Auslaufshuttle 7 werden die Glastafeln 14 dann in die erste und zweite Auslaufstrecke 9a;b befördert, insbesondere in die jeweilige Speicherstrecke 24. Wiederum werden die sich in dem oberen Stockwerk 13 des Auslaufshuttles 7 befindlichen Glastafeln 14 in das obere Stockwerk 30b der jeweiligen Speicherstrecke 24 befördert und die sich in dem unteren Stockwerk 12 des Auslaufshuttles 7 befindlichen Glastafeln 14 werden in das untere Stockwerk 30a der jeweiligen Speicherstrecke 24 befördert. Die doppelstöckige Ausbildung der Speicherstrecken 24 dient somit dem schnellen Austransport aus dem Auslaufshuttle 7 zur Optimierung der Taktzeit des Auslaufshuttles 7.

In der ersten Auslaufstrecke 9a werden die Glastafeln 14 dann weiter in Hauptförderrichtung 10 in die Transport- und Hubvorrichtung 23 befördert. Die sich im oberen Stockwerk 30b der Speicherstrecke 24 befindlichen Glastafeln 14 werden auf die angehobenen Transportrollen 26b befördert und durch Absenken dieser abgesenkt. Sind versenkbare Transportrollen 26c vorhanden, werden diese zuvor versenkt. Sind Hubhaken 38 vorhanden, so heben diese zuerst die Glastafeln 14 an um das Versenken der Transportrollen 26d zu ermöglichen, danach erfolgt das Absenken auf den Hubhaken 38. Dann werden die Glastafeln 14 von der unteren Rollenbahn 25 der Transport- und Hubvorrichtung 23 in die einstöckige Transportvorrichtung 22 gefördert. In diesem Schritt findet dann vorzugsweise die endgültige Festlegung der Sortierreihenfolge statt. Diese wird durch entsprechende Sequenzierung der Transport- und Hubbewegungen endgültig definiert.

Von der einstöckigen Transportvorrichtung 22 werden die Glastafeln 14 dann zur gewünschten Weiterverarbeitungslinie, z.B. einer Isolierglaslinie oder Bearbeitungsmaschine oder einem Härteofen oder einer Painting-Anlage befördert.

In der erfindungsgemäßen Speichervorrichtung 1 findet somit bevorzugt ausschließlich eine Speicherung und Sortierung der Glastafeln 14 statt, keine Bearbeitung.

In der zweiten Auslaufstrecke 9b werden die Glastafeln 14 noch von einer zur nächsten Speicherstrecke 24 befördert.

An die erste oder zweite Speicherstrecke 24 kann sich eine doppelstöckige Bearbeitung wie in der Patentanmeldung WO 2018/010942 A1 anschließen. Eine weitere Verwendung kann die ein- und doppelstöckige Ausförderung z.B. in doppelstöckige mobile Transportgestelle, bevorzugt Fächerwagen, oder die automatische Abnahme auf einstöckige Transportgestelle (z.B. Fächerwagen, A-Racks, L-Racks) darstellen (nicht dargestellt).

In umgekehrter Richtung können von dieser Position aus auch je nach Glastafelgröße und Bedarf, Glastafeln 14 ein- oder doppelstöckig eingeführt werden um entsprechend in den Speichereinrichtungen 3a,3b,3c sortiert zwischengespeichert zu werden.

Während des gesamten Verfahren werden die Positionen der Glastafeln 14, also z.B. in welchem Fach welcher Speichereinrichtung 3a;3b;3c oder in welchem Stockwerk welcher Speicherstrecke 24, welcher Transport- und Hubvorrichtung 23 oder welchen Shuttles 6;7 welche Glastafel 14 wann angeordnet ist, vorzugsweise automatisiert gespeichert. Und das Einsortieren, Herausnehmen, Anheben und Verfahren etc. der Glastafeln 14 erfolgt vorzugsweise ebenfalls automatisiert gesteuert, wozu entsprechende Steuer-und Antriebsmittel vorhanden sind, die mit den jeweiligen Vorrichtungen in Verbindung stehen. Insbesondere weisen die Steuermittel eine entsprechende Software zu Sequenzierung der Vorsortierung und Nachsortierung wie auch zur Sicherungen gegen auftretende Überlappungen auf. Zumindest teilweise können die Verfahrensschritte aber auch manuell erfolgen.

Vorteil der erfindungsgemäßen doppelstöckigen Shuttles 6;7 ist, dass der Durchsatz durch die Speicher- und Sortiervorrichtung 1 deutlich erhöht werden kann.

Besonders vorteilhaft ist auch, dass sowohl Glastafeln 14, deren Höhe geringer ist als ein Stockwerk, also auch Glastafeln, die höher sind als ein Stockwerk befördert und gespeichert werden können. In der Regel sind die Speichereinrichtungen meist mit niedrigen Glastafeln 14 befüllt (Hauptproduktion) obwohl die Speichereinrichtungen und Transporteinrichtungen für maximale Transportgrößen ausgelegt sind, welche meist nur einen kleinen Teil der Produktion ausmachen Denn typischerweise haben mehr als 80 % der Glastafeln 14 eine Höhe unter 1000 mm. Da allerdings auch einige Glastafeln größer sind, müssen die bekannten Speichereinrichtungen auch für die großen Glastafeln dimensioniert sein. Diese Speichereinrichtungen weisen somit viel ungenutzte Speicherfläche auf. Im Rahmen der Erfindung können nun sowohl die niedrigen als auch die hohen Glastafeln 14 von den Shuttles 6;7 befördert werden und in der jeweiligen einstöckigen oder zweistöckigen Speichereinrichtung gespeichert werden, so dass der Füllgrad der Speichereinrichtungen deutlich erhöht werden kann. Insbesondere auch aufgrund der in der Rückwand versenkbaren Transportrollen 26c;26d ist auch in den Speicherstrecken 24 sowohl die platzeffiziente Speicherung und Förderung von kleinen Glastafeln 14 wie auch die produktionsrelevante Speicherung und Förderung von großen Glastafeln möglich.

Im Bereich der zumindest doppelstöckigen Speicherstrecken 24 kann zudem eine zusätzliche Sortierung, eine Vorsortierung bzw. Nachsortierung, stattfinden, wodurch Umsortierungen mittels der Shuttles 6,7 reduziert werden und damit die Taktzeiten ebenfalls erhöht werden können.

Durch die Möglichkeit der doppelstöckigen Beladung und Entladung wir die relative Taktzeit pro Glastafel 14 erheblich reduziert.

Aufgrund der nun für gleiche Kapazität verkürzten Bufferbereiche reduzieren sich die Fahrwege und dies wirkt sich positiv auf die Taktzeit der Shuttles 6;7 aus.

Die in einer Auslaufstrecke 9a;b angeordnete doppelstöckige Speicherstrecke 24 dient zur Optimierung der Ausladung. Sie dient insbesondere als zusätzlicher Buffer zwischen dem Auslaufshuttle 7 und den nachgelagerten Maschinen. Damit wird die notwendige zeitliche Synchronisierung von Anlieferung und Bedarf der Nachmaschine aufgeweitet, und somit können die Shuttlefahrten optimiert werden.

Durch die Transport- und Hubeinrichtungen 23 der Einlaufstrecken 8a;8b ist es zudem möglich auf der Speichertrecke 24 Glastafeln 14 für den Transport mit dem Einlaufshuttle 6 zum einen Aufzustauen um eine optimale Befüllung bei minimaler Wartezeit des Einlaufshuttles 6 zu gewähren und zusätzlich durch die Sequenz der Transport- und Hubeinrichtung 23 eine Vorsortierung der Glastafeln 14 durchzuführen. Diese ist wiederum der Erlangung einen für die nachfolgenden Produktionsschritte erforderlichen Sortierreihenfolge förderlich.

Die Hubhaken 38 bieten den Vorteil, dass der Rollenabstand der unteren Transportrollen 26a nur geringfügig geändert werden muss, womit auch der sichere Transport kleiner Glastafeln 14 gewährleistet ist.

Vorteilhafterweise kann die Transport- und Hubeinrichtung 23 wie auch die ausfahrbaren Transportrollen des oberen Stockwerks 29b auch mehrfach in horizontaler Richtung in mehrere, in horizontaler Richtung zueinander benachbarte Segmente geteilt ausgeführt sein. Das heißt, es können mehrere Glastafeln 14 versetzt zueinander bzw. unabhängig voneinander abgehoben und abgesenkt werden. Bzw. jedes Segment kann Glastafeln 14 unabhängig von den anderen Segmenten anheben/absenken. Dies bietet beim Anheben von Glastafeln 14, welche kürzer als ein jeweiliges Segment ist, die Möglichkeit, den Staubereich für die Glastafeln 14 im Hubbereich noch besser zu nutzen.

Vorteilhafterweise kann die im Bereich einer Einlaufstrecke 8a;b vorhandene Transport- und Hubeinrichtung 23 vorteilhafterweise auch so ausführt sein, dass durch einen Mechanismus das Absenken der Hubhaken 38 ohne Glastafel 14 zur unteren Position in der Rückwand 37 passiert. Gleichermaßen kann die im Bereich einer Auslaufstrecke 9a;b vorhandene Transport- und Hubeinrichtung 23 vorteilhafterweise auch so ausführt sein, dass durch einen Mechanismus das Anheben der Hubhaken 38 ohne Glastafel 14 zur oberen Position in der Rückwand 37 passiert. Die Hubhaken 38 sind also zum Anheben und/oder Absenken in der Rückwand 37 versenkbar und in der versenkten Position anhebbar und/oder absenkbar. Damit wird sichergestellt, dass das Absenken bzw. Anheben der Hubhaken 38 die Produktionssequenz im Bereich der Transport- und Hubeinrichtung 23 nicht negativ beeinflusst.

Im Rahmen der Erfindung liegt es zudem auch, dass die jeweiligen Stationen, also die Transport- und Hubvorrichtungen 23, die Speicherstrecken 24, die Shuttle 6;7 und die Speichereinrichtungen 3a;3b;3c anstelle der Rollenbahnen andere Transportbahnen und Transportmittel zum, insbesondere aktiven, horizontalen Transport der Glastafeln 14, z.B. Riemen bzw. Transportbänder aufweisen. Auch können die Stationen Greifer zum Greifen und zum Ziehen und zum Schieben der Glastafeln 14 aufweisen.

Des Weiteren liegt es im Rahmen der Erfindung, dass auf derselben Verfahrbahn 4 mehrere Shuttle 6;7 verfahren. Dabei müssen nicht alle Shuttles mehrstöckig ausgebildet sein.

Auch ist der beschriebene Aufbau der Ein- und Auslaufstrecken 8a;8b;9a;9b lediglich exemplarisch. Beispielsweise kann - abhängig von der jeweiligen Anwendung - die Speicherstrecke 24 in der Einlaufstrecke 8a;b und/oder der Auslaufstrecke 9a;b entfallen, auch wenn vorzugsweise mindestens jeweils eine Speicherstrecke 24 vorhanden ist.

Bei den Speichereinrichtungen 3a;3b;3c kann es sich zudem auch um verfahrbare Speichereinrichtungen, z.B. Fächerwagen, handeln.

Des Weiteren liegt es im Rahmen der Erfindung, dass die Shuttles 6;7, die Speicherstrecken 24, die Transport- und Hubvorrichtung 23 und die Speicher 3a-c mehr als zwei Stockwerke aufweisen, bevorzugt bis zu 3 Stockwerke. In diesem Fall sind auch z.B. mehrere übereinander angeordnete obere Rollenbahnen vorhanden.

## Patentansprüche

1. Auf einer festen Verfahrbahn (4) hin- und her verfahrbares Shuttle (6;7) zum Transportieren von aufrecht stehenden plattenförmigen Elementen, vorzugsweise von Glastafeln (14), und zum Einsortieren der plattenförmigen Elemente in entlang der Verfahrbahn (4) angeordnete vertikale Speichereinrichtungen (3a;3b;3c) und/oder zur Entnahme der plattenförmigen Elemente aus den Speichereinrichtungen (3a;3b;3c),
**dadurch gekennzeichnet, dass**
das Shuttle (6;7) zumindest zweistöckig ausgebildet ist und zumindest zwei übereinander angeordnete Stockwerke (12;13) zur zumindest zweistöckigen Aufnahme der plattenförmigen Elemente, vorzugsweise der Glastafeln (14), aufweist.

2. Shuttle nach Anspruch 1,
**dadurch gekennzeichnet, dass**
jedes Stockwerk (12; 13) zumindest ein Fach (15) zur Aufnahme mindestens einer Glastafel (14) aufweist, wobei jedes Stockwerk (12;13), vorzugsweise höchstens 5, bevorzugt höchstens 4, besonders bevorzugt höchstens zwei in eine Shuttlebreitenrichtung (6b;7b) nebeneinander angeordnet Fächer (15) aufweist.

3. Shuttle nach Anspruch 1 oder 2,
**dadurch gekennzeichnet, dass**
das Shuttle (6;7) mehrere übereinander angeordnete Transportbahnen, vorzugsweise zumindest eine obere Transportbahn und eine untere Transportbahn, zur zumindest zweistöckigen Aufnahme und zum zweistöckigen Transport der plattenförmigen Elemente aufweist, wobei die obere(n) Transportbahn(en) die Stockwerke (12;13) voneinander trennt/trennen, wobei es sich bei den Transportbahnen vorzugsweise um Rollenbahnen (17;18) mit Transportrollen (19a;19b) handelt.

4. Shuttle nach einem der vorhergehenden Ansprüche,
**dadurch gekennzeichnet, dass**
das Shuttle (6;7) derart ausgebildet ist, dass, insbesondere in zumindest zwei übereinander angeordneten Fächern (15), alternativ auch zumindest ein plattenförmiges Element aufgenommen und gefördert werden kann, das höher als das untere Stockwerk (12) ist,
wobei vorzugsweise die oberen Transportbahn(en) zumindest eines Faches (15) derart aus dem Fach (15) heraus bewegbar ist/sind, vorzugsweise in einer Wand (20) des Shuttles (6;7) versenkbar ist/sind, dass in zwei übereinander angeordneten Fächern (15) alternativ ein plattenförmiges Element aufgenommen werden kann, das höher als das untere Stockwerk (12) ist,
wobei vorzugsweise die Transportrollen (19b) der oberen Rollenbahn(en) (18) zumindest eines Faches (15) derart aus dem Fach (15) heraus bewegbar sind, vorzugsweise in einer Wand (20) des Shuttles (6;7) versenkbar sind, dass in zwei übereinander angeordneten Fächern (15) ein plattenförmiges Element aufgenommen werden kann, das höher als das untere Stockwerk (12) ist.

5. Shuttle nach einem der vorhergehenden Ansprüche,
**dadurch gekennzeichnet, dass**
das Shuttle (6;7) Mittel zum, bevorzugt aktiven, Ein- und Ausfördern der plattenförmigen Elemente in und aus dem Shuttle (6;7) aufweist.

6. Speichervorrichtung (1) zum Speichern von aufrecht stehenden plattenförmigen Elementen, vorzugsweise von Glastafeln (14), mit einer Speicheranordnung (2) mit zumindest einer vertikalen Speichereinrichtung (3a;3b;3c) zur Aufnahme der plattenförmigen Elemente, und mit mindestens einem entlang der Speicheranordnung (2) auf einer festen Verfahrbahn (4) hin- und her verfahrbaren Shuttle (6;7),
**dadurch gekennzeichnet, dass**
zumindest eine der Speichereinrichtungen (3a;3b;3c) zumindest zweistöckig ausgebildet ist und zumindest zwei übereinander angeordnete Stockwerke zur Aufnahme der plattenförmigen Elemente, vorzugsweise der Glastafeln (14), aufweist, und
das Shuttle (6;7) gemäß einem der vorhergehenden Ansprüche ausgebildet ist.

7. Speichervorrichtung (1) nach Anspruch 6,
**dadurch gekennzeichnet, dass**
die Speichervorrichtung (1) eine Speicheranordnung (2) mit mehreren, nebeneinander angeordneten, vertikalen Speichereinrichtungen (3a;3b;3c), mindestens ein entlang der Speicheranordnung (2) verfahrbares Einlaufshuttle (6), mindestens ein entlang der Speicheranordnung (2) verfahrbares Auslaufshuttle (7) sowie mindestens eine Einlaufstrecke (8a;b) und mindestens eine Auslaufstrecke (9a;b) aufweist, wobei das Einlaufshuttle (6) an einer Einlaufseite (2a) der Speicheranordnung (2) und zwischen der Einlaufstrecke (8a;8b) und der Speicheranordnung (2) angeordnet ist und das Auslaufshuttle (7) an einer Auslaufseite (2b) der Speicheranordnung (2) und zwischen der Auslaufstrecke (9a;9b) und der Speicheranordnung (2) angeordnet ist.

8. Speichervorrichtung (1) nach Anspruch 6 oder 7,
**dadurch gekennzeichnet, dass**
das Shuttle (6;7) entlang der Verfahrbahn (4), bevorzugt auf Schienen (5), mittels Antriebs- und Steuermitteln automatisiert hin- und her verfahrbar ist.

9. Speichervorrichtung (1) nach einem der Ansprüche 6 bis 8,
**dadurch gekennzeichnet, dass**
eine mehrstöckige, bevorzugt zweistöckige, Speichereinrichtung (3b;3c) mehrere übereinander angeordnete Transportbahnen, vorzugsweise zumindest eine obere Transportbahn und eine untere Transportbahn zur Aufnahme und Förderung der plattenförmigen Elemente aufweist, wobei die obere(n) Transportbahn(en) die Stockwerke der Speichereinrichtung (3b;3c) voneinander trennt/trennen, wobei es sich bei den Transportbahnen vorzugsweise um Rollenbahnen mit Transportrollen handelt.

10. Speichervorrichtung (1) nach einem der Ansprüche 6 bis 9,
**dadurch gekennzeichnet, dass**
eine Speichereinrichtung (3a;3b;3c) pro Stockwerk mindestens 30 zueinander benachbarte Fächer (21) zur Aufnahme der plattenförmigen Elemente aufweist.

11. Speichervorrichtung (1) nach einem der Ansprüche 6 bis 10,
**dadurch gekennzeichnet, dass**
die Speichervorrichtung (1), vorzugsweise jede Einlaufstrecke (8a;b) und/oder jede Auslaufstrecke (9a;b), eine Transport- und Hubeinrichtung (23) zum Anheben der plattenförmigen Elemente auf Höhe des oberen Stockwerks oder der oberen Stockwerke (13) eines Shuttles (6;7) und zum mehrstöckigen, bevorzugt doppelstöckigen, Transport der plattenförmigen Elemente in oder entgegen eine horizontale Hauptförderrichtung (10) aufweist.

12. Speichervorrichtung (1) nach Anspruch 11,
**dadurch gekennzeichnet, dass**
die Transport- und Hubeinrichtung (23) eine untere Rollenbahn (25) mit ortfesten Transportrollen (26a) und anhebbare Transportrollen (26b) aufweist, wobei die anhebbaren Transportrollen (26b) in ihrer nicht angehobenen Stellung vorzugsweise Teil der unteren Rollenbahn (25) sind und/oder in ihrer angehobenen Stellung eine obere Rollenbahn (27) bilden,
wobei vorzugsweise die Transport- und Hubeinrichtung (23) in einer Wand (37) der Transport- und Hubvorrichtung (23) versenkbare Transportrollen (26c) aufweist, die mit den anhebbaren Transportrollen (26b) in deren oberer Stellung eine horizontale obere Rollenbahn (27) bilden.

13. Speichervorrichtung (1) nach Anspruch 11,
**dadurch gekennzeichnet, dass**
die Transport- und Hubeinrichtung (23) eine untere Rollenbahn (25) mit ortfesten Transportrollen (26a) und in einer Wand (37) der Transport-und Hubvorrichtung (23) versenkbare, darüber angeordnete obere Transportrollen (26c) aufweist, die in ihrer ausgefahrenen Stellung eine horizontale obere Rollenbahn (27) bilden, wobei die Transport- und Hubeinrichtung (23) Mittel, insbesondere anhebbare und absenkbare Hubhaken (38), zum Anheben und Absenken der plattenförmigen Elemente aufweist.

14. Speichervorrichtung (1) nach einem der Ansprüche 6 bis 13,
**dadurch gekennzeichnet, dass**
die Speichervorrichtung (1), vorzugsweise die zumindest eine Einlaufstrecke (8a;b) und/oder die zumindest eine Auslaufstrecke (9a;b), eine mehrstöckige, bevorzugt doppelstöckige, Speicherstrecke (24) zum mehrstöckigen, bevorzugt doppelstöckigen, Transport der plattenförmigen Elemente in oder entgegen die horizontale Hauptförderrichtung (10) aufweist.

15. Speichervorrichtung (1) nach einem der Ansprüche 7 bis 14,
**dadurch gekennzeichnet, dass**
die zumindest eine Einlaufstrecke (8a;b) eine mehrstöckige, bevorzugt doppelstöckige, Einrichtung (24), bevorzugt eine Speicherstrecke (24), zur mehrstöckigen, bevorzugt doppelstöckigen, direkten Übergabe der plattenförmigen Elemente an das Einlaufshuttle (6) aufweist.

16. Speichervorrichtung (1) nach einem der Ansprüche 7 bis 15,
**dadurch gekennzeichnet, dass**
die zumindest eine Auslaufstrecke (9a;b) eine mehrstöckige, bevorzugt doppelstöckige, Einrichtung (24), bevorzugt eine Speicherstrecke (24), zur mehrstöckigen, bevorzug doppelstöckigen, direkten Aufnahme der plattenförmigen Elemente aus dem Auslaufshuttle (7) aufweist.

17. Speichervorrichtung (1) nach einem der Ansprüche 13 bis 16,
**dadurch gekennzeichnet, dass**
die Hubhaken (38) in der Wand (37) versenkbar sind und in der versenkten Position anhebbar und/oder absenkbar sind.

18. Speichervorrichtung (1) nach einem der Ansprüche 11 bis 17,
**dadurch gekennzeichnet, dass**
zumindest eine Transport- und Hubeinrichtung (23) mehrere in horizontaler Richtung zueinander benachbarte Segmente aufweist, in denen plattenförmigen Elemente unabhängig voneinander angehoben und abgesenkt werden können.

19. Speichervorrichtung (1) nach einem der Ansprüche 11 bis 18,
**dadurch gekennzeichnet, dass**
zumindest eine Transport- und Hubeinrichtung (23) und/oder zumindest eine Speicherstrecke (24) derart ausgebildet ist, dass alternativ auch ein plattenförmiges Element aufgenommen und gefördert werden kann, das höher als das untere Stockwerk (29a;30a) ist,
wobei vorzugsweise die oberen Transportbahn(en) derart in einer Wand (34;37) der Transport- und Hubeinrichtung (23) und/oder der Speicherstrecke (24) versenkbar ist/sind, dass alternativ ein plattenförmiges Element aufgenommen werden kann, das höher als das untere Stockwerk (29a;30a) ist.

## Claims

1. Shuttle (6;7) which can be moved back and forth on a fixed travel path (4) for transporting upright plate-shaped elements, preferably glass plates (14), and for sorting the plate-shaped elements into vertical storage devices (3a;3b;3c) arranged along the travel path (4) and/or for removing the plate-shaped elements from the storage devices (3a;3b;3c),
**characterized in that**
the shuttle (6;7) is at least two-storied and has at least two floors (12;13) arranged one above the other for at least two-storied reception of the plate-shaped elements, preferably the glass plates (14).

2. Shuttle according to claim 1,
**characterized in that**
each floor (12;13) has at least one compartment (15) for receiving at least one glass panel (14), wherein each floor (12;13) preferably has at most 5, preferably at most 4, particularly preferably at most two compartments (15) arranged next to one another in a shuttle width direction (6b;7b).

3. Shuttle according to claim 1 or 2,
**characterized in that**
the shuttle (6;7) has a plurality of transport tracks arranged one above the other, preferably at least one upper transport track and one lower transport track, for at least two-storied reception and two-storied transport of the plate-shaped elements, the upper transport track(s) separating the floors (12;13) from one another, the transport tracks preferably being roller tracks (17;18) with transport rollers (19a;19b).

4. Shuttle according to any one of the preceding claims,
**characterized in that**
the shuttle (6;7) is designed in such a way that, in particular in at least two compartments (15) arranged one above the other, alternatively also at least one plate-shaped element can be received and conveyed which is higher than the lower floor (12),
wherein preferably the upper transport track(s) of at least one compartment (15) is/are movable out of the compartment (15), preferably is/are retractable in a wall (20) of the shuttle (6;7), in such a way that in two compartments (15) arranged one above the other a plate-shaped element can alternatively be accommodated which is higher than the lower floor (12),
wherein preferably the transport rollers (19b) of the upper roller track(s) (18) of at least one compartment (15) are movable out of the compartment (15), preferably retractable in a wall (20) of the shuttle (6;7), in such a way that in two compartments (15) arranged one above the other a plate-shaped element can be received which is higher than the lower floor (12).

5. Shuttle according to any one of the preceding claims,
**characterized in that**
the shuttle (6;7) has means for, preferably actively, conveying the plate-shaped elements into and out of the shuttle (6;7).

6. Storage device (1) for storing upright plate-shaped elements, preferably glass plates (14), having a storage arrangement (2) with at least one vertical storage apparatus (3a;3b;3c) for receiving the plate-shaped elements, and having at least one shuttle (6;7) which can be moved back and forth along the storage arrangement (2) on a fixed travel path (4),
**characterized in that**
at least one of the storage apparatuses (3a;3b;3c) is at least two-storied and has at least two stories arranged one above the other for receiving the plate-shaped elements, preferably the glass plates (14), and
the shuttle (6;7) is constructed according to any one of the preceding claims.

7. Storage device (1) according to claim 6,
**characterized in that**
the storage device (1) has a storage arrangement (2) with a plurality of vertical storage apparatuses (3a;3b;3c) arranged next to one another, at least one inlet shuttle (6) movable along the storage arrangement (2), at least one outlet shuttle (7) movable along the storage arrangement (2), and at least one inlet section (8a;b) and at least one outlet section (9a;b), the inlet shuttle (6) being arranged on an inlet side (2a) of the storage arrangement (2) and between the inlet section (8a;8b) and the storage arrangement (2), and the outlet shuttle (7) being arranged on an outlet side (2b) of the storage arrangement (2) and between the outlet section (9a;9b) and the storage arrangement (2).

8. Storage device (1) according to claim 6 or 7,
**characterized in that**
the shuttle (6;7) can be moved back and forth along the travel path (4), preferably on rails (5), in an automated manner by means of driving and controlling means.

9. Storage device (1) according to any one of claims 6 to 8,
**characterized in that**
a multi-storied, preferably two-storied, storage apparatus (3b;3c) has a plurality of transport tracks arranged one above the other, preferably at least one upper transport track and one lower transport track for receiving and conveying the plate-shaped elements, the upper transport track(s) separating the floors of the storage apparatus (3b;3c) from one another, the transport tracks preferably being roller tracks with transport rollers.

10. Storage device (1) according to any one of claims 6 to 9,
**characterized in that**
a storage apparatus (3a;3b;3c) has at least 30 mutually adjacent compartments (21) per floor for receiving the plate-shaped elements.

11. Storage device (1) according to any one of claims 6 to 10,
**characterized in that**
the storage device (1), preferably each inlet section (8a;b) and/or each outlet section (9a;b), has a transport and lifting device (23) for lifting the plate-shaped elements to the level of the upper floor or floors (13) of a shuttle (6;7) and for multi-storied, preferably two-storied, transport of the plate-shaped elements in or against a horizontal main conveying direction (10).

12. Storage device (1) according to claim 11,
**characterized in that**
the transport and lifting device (23) has a lower roller track (25) with stationary transport rollers (26a) and liftable transport rollers (26b), the liftable transport rollers (26b) in their non-lifted position preferably being part of the lower roller track (25) and/or in their lifted position forming an upper roller track (27),
wherein preferably the transport and lifting device (23) comprises transport rollers (26c) which are retractable in a wall (37) of the transport and lifting device (23) and which form a horizontal upper roller track (27) with the liftable transport rollers (26b) in the upper position thereof.

13. Storage device (1) according to claim 11,
**characterized in that**
the transport and lifting device (23) has a lower roller track (25) with stationary transport rollers (26a) and upper transport rollers (26c) which can be retracted into a wall (37) of the transport and lifting device (23) and are arranged thereabove and which, in their extended position, form a horizontal upper roller track (27), the transport and lifting device (23) having means, in particular liftable and lowerable lifting hooks (38), for lifting and lowering the plate-shaped elements.

14. Storage device (1) according to any one of claims 6 to 13,
**characterized in that**
the storage device (1), preferably the at least one inlet section (8a;b) and/or the at least one outlet section (9a;b), has a multi-storied, preferably two-storied, storage section (24) for multi-storied, preferably two-storied, transport of the plate-shaped elements in or against the horizontal main conveying direction (10).

15. Storage device (1) according to any one of claims 7 to 14,
**characterized in that**
the at least one inlet section (8a;b) has a multi-storied, preferably two-storied, device (24), preferably a storage section (24), for multi-storied, preferably two-storied, direct transfer of the plate-shaped elements to the inlet shuttle (6).

16. Storage device (1) according to any one of claims 7 to 15,
**characterized in that**
the at least one outlet section (9a;b) has a multi-storied, preferably double-storied, device (24), preferably a storage section (24), for the multi-storied, preferably double-storied, direct reception of the plate-shaped elements from the outlet shuttle (7).

17. Storage device (1) according to any one of claims 13 to 16,
**characterized in that**
the lifting hooks (38) are retractable in the wall (37) and can be lifted and/or lowered in the retracted position.

18. Storage device (1) according to any one of claims 11 to 17,
**characterized in that**
at least one transport and lifting device (23) has a plurality of segments which are adjacent to one another in the horizontal direction and in which plate-shaped elements can be lifted and lowered independently of one another.

19. Storage device (1) according to any one of claims 11 to 18,
**characterized in that**
at least one transport and lifting device (23) and/or at least one storage section (24) is designed in such a way that, alternatively, a plate-shaped element that is higher than the lower floor (29a;30a) can also be received and conveyed,
wherein preferably the upper transport track(s) is/are retractable in a wall (34;37) of the transport and lifting device (23) and/or of the storage section (24) in such a way that alternatively a plate-shaped element can be received which is higher than the lower floor (29a;30a).

## Revendications

1. Navette (6 ; 7) déplaçable alternativement sur une bande de déplacement (4) fixe pour le transport d'éléments en forme de plaque se trouvant debout, de préférence de plaques de verre (14), et pour le tri des éléments en forme de plaque dans des dispositifs de stockage (3a ; 3b ; 3c) verticaux agencés le long de la bande de déplacement (4) et/ou pour le retrait des éléments en forme de plaque hors des dispositifs de stockage (3a ; 3b ; 3c),
**caractérisée en ce que**
la navette (6 ; 7) est réalisée au moins à deux étages et présente au moins deux étages (12; 13) agencés l'un au-dessus de l'autre pour la réception au moins à deux étages des éléments en forme de plaque, de préférence des plaques de verre (14).

2. Navette selon la revendication 1,
**caractérisée en ce que**
chaque étage (12 ; 13) présente au moins un compartiment (15) pour la réception d'au moins une plaque de verre (14), dans laquelle chaque étage (12 ; 13) présente, de préférence au plus 5, de préférence au plus 4, de manière particulièrement préférée au plus deux compartiments (15) agencés l'un à côté de l'autre dans un dispositif de largeur de la navette (6b ; 7b).

3. Navette selon la revendication 1 ou 2,
**caractérisée en ce que**
la navette (6 ; 7) présente plusieurs bandes de transport agencées les unes au-dessus des autres, de préférence au moins une bande de transport supérieure et une bande de transport inférieure, pour la réception au moins à deux étages et pour le transport à deux étages des éléments en forme de plaque, dans laquelle la/les bande(s) de transport supérieure(s) sépare(nt) les étages (12 ; 13) l'un de l'autre, dans laquelle il s'agit pour les bandes de transport de préférence de bandes de rouleaux (17 ; 18) avec des rouleaux de transport (19a ; 19b).

4. Navette selon l'une quelconque des revendications précédentes,
**caractérisée en ce que**
la navette (6 ; 7) est réalisée de telle manière qu'en particulier dans au moins deux compartiments (15) agencés l'un au-dessus de l'autre, en variante au moins un élément en forme de plaque peut aussi être reçu et transporté lequel est plus haut que l'étage (12) inférieur,
dans laquelle de préférence, la/les bande(s) de transport supérieure(s) au moins d'un compartiment (15) est/sont mobile(s) hors du compartiment (15), est/sont escamotable(s) de préférence dans une paroi (20) de la navette (6 ; 7) de telle manière que dans deux compartiments (15) agencés l'un au-dessus de l'autre un élément en forme de plaque puisse être reçu en variante, lequel est plus haut que l'étage (12) inférieur,
dans laquelle de préférence, les rouleaux de transport (19b) de la/des bande(s) de rouleaux supérieure(s) (18) au moins d'un compartiment (15) sont mobiles hors du compartiment (15), sont de préférence escamotables dans une paroi (20) de la navette (6 ; 7) de telle manière que dans deux compartiments (15) agencés l'un au-dessus de l'autre un élément en forme de plaque puisse être reçu, lequel est plus haut que l'étage (12) inférieur.

5. Navette selon l'une quelconque des revendications précédentes,
**caractérisée en ce que**
la navette (6 ; 7) présente des moyens pour le transport et l'évacuation de préférence actifs des éléments en forme de plaque dans et hors de la navette (6 ; 7).

6. Dispositif de stockage (1) pour le stockage d'éléments en forme de plaque se trouvant debout, de préférence de plaques de verre (14), avec un agencement de stockage (2) avec au moins un dispositif de stockage (3a ; 3b ; 3c) vertical pour la réception des éléments en forme de plaque, et avec au moins une navette (6 ; 7) déplaçable alternativement le long de l'agencement de stockage (2) sur une bande de déplacement (4) fixe,
**caractérisé en ce que**
au moins un des dispositifs de stockage (3a ; 3b ; 3c) est réalisé à au moins deux étages et présente au moins deux étages agencés l'un au-dessus de l'autre pour la réception des éléments en forme de plaque, de préférence des plaques de verre (14), et
la navette (6 ; 7) est réalisée selon l'une quelconque des revendications précédentes.

7. Dispositif de stockage (1) selon la revendication 6,
**caractérisé en ce que**
le dispositif de stockage (1) présente un agencement de stockage (2) avec plusieurs dispositifs de stockage (3a ; 3b ; 3c) verticaux, agencés les uns à côté des autres, au moins une navette d'entrée (6) déplaçable le long de l'agencement de stockage (2), au moins une navette de sortie (7) déplaçable le long de l'agencement de stockage (2) ainsi qu'au moins un parcours d'entrée (8a ; b) et au moins un parcours de sortie (9a ; b), dans lequel la navette d'entrée (6) est agencée au niveau d'un côté d'entrée (2a) de l'agencement de stockage (2) et entre le parcours d'entrée (8a ; 8b) et l'agencement de stockage (2) et la navette de sortie (7) est agencée au niveau d'un côté de sortie (2b) de l'agencement de stockage (2) et entre le parcours de sortie (9a ; 9b) et l'agencement de stockage (2).

8. Dispositif de stockage (1) selon la revendication 6 ou 7,
**caractérisé en ce que**
la navette (6 ; 7) est déplaçable alternativement de manière automatisée le long de la bande de déplacement (4), de préférence sur des rails (5), à l'aide de moyens d'entraînement et de commande.

9. Dispositif de stockage (1) selon l'une quelconque des revendications 6 à 8,
**caractérisé en ce que**
un dispositif de stockage (3b ; 3c) à plusieurs étages, de préférence à deux étages présente plusieurs bandes de transport agencées les unes au-dessus des autres, de préférence au moins une bande de transport supérieure et une bande de transport inférieure pour la réception et le transport des éléments en forme de plaque, dans lequel la/les bande(s) de transport supérieure(s) sépare(ent) les étages du dispositif de stockage (3b ; 3c) l'un de l'autre, dans lequel il s'agit pour les bandes de transport de préférence de bandes de rouleaux avec des rouleaux de transport.

10. Dispositif de stockage (1) selon l'une quelconque des revendications 6 à 9,
**caractérisé en ce que**
un dispositif de stockage (3a ; 3b ; 3c) par étage présente au moins 30 compartiments (21) contigus les uns aux autres pour la réception des éléments en forme de plaque.

11. Dispositif de stockage (1) selon l'une quelconque des revendications 6 à 10,
**caractérisé en ce que**
le dispositif de stockage (1) présente de préférence chaque parcours d'entrée (8a ; b) et/ou chaque parcours de sortie (9a ; b), un dispositif de transport et de levage (23) pour le levage des éléments en forme de plaque à hauteur de l'étage supérieur ou des étages supérieurs (13) d'une navette (6 ; 7) et pour le transport à plusieurs étages, de préférence à double étage des éléments en forme de plaque dans le sens ou dans le sens inverse au sens de transport principal horizontal (10).

12. Dispositif de stockage (1) selon la revendication 11,
**caractérisé en ce que**
le dispositif de transport et de levage (23) présente une bande de rouleaux (25) inférieure avec des rouleaux de transport (26a) fixes et des rouleaux de transport (26b) levables, dans lequel les rouleaux de transport (26b) levables dans leur position non levée font partie de préférence de la bande de rouleaux (25) inférieure et/ou dans leur position levée forment une bande de rouleaux (27) supérieure,
dans lequel de préférence, le dispositif de transport et de levage (23) présente des rouleaux de transport (26c) escamotables dans une paroi (37) du dispositif de transport et de levage (23) qui forment avec les rouleaux de transport (26b) levables dans leur position supérieure une bande de rouleaux (27) supérieure horizontale.

13. Dispositif de stockage (1) selon la revendication 11,
**caractérisé en ce que**
le dispositif de transport et de levage (23) présente une bande de rouleaux (25) inférieure avec des rouleaux de transport (26a) fixes et des rouleaux de transport (26c) supérieurs agencés au-dessus, escamotables dans une paroi (37) du dispositif de transport et de levage (23) qui forment dans leur position sortie une bande de rouleaux (27) supérieure horizontale, dans lequel le dispositif de transport et de levage (23) présente des moyens, en particulier des crochets de levage (38) levables et abaissables pour le levage et l'abaissement des éléments en forme de plaque.

14. Dispositif de stockage (1) selon l'une quelconque des revendications 6 à 13,
**caractérisé en ce que**
le dispositif de stockage (1) présente de préférence l'au moins un parcours d'entrée (8a ; b) et/ou l'au moins un parcours de sortie (9a ; b), un parcours de stockage (24) à plusieurs étages, de préférence à double étage pour le transport à plusieurs étages, de préférence à double étage des éléments en forme de plaque dans le sens ou dans le sens inverse au sens de transport principal horizontal (10).

15. Dispositif de stockage (1) selon l'une quelconque des revendications 7 à 14,
**caractérisé en ce que**
l'au moins un parcours d'entrée (8a ; b) présente un dispositif (24) à plusieurs étages, de préférence à double étage, de préférence un parcours de stockage (24) pour la remise directe à plusieurs étages, de préférence à double étage des éléments en forme de plaque à la navette d'entrée (6).

16. Dispositif de stockage (1) selon l'une quelconque des revendications 7 à 15,
**caractérisé en ce que**
l'au moins un parcours de sortie (9a ; b) présente un dispositif (24) à plusieurs étages, de préférence à double étage, de préférence un parcours de stockage (24), pour la réception directe à plusieurs étages, de préférence à double étage des éléments en forme de plaque hors de la navette de sortie (7).

17. Dispositif de stockage (1) selon l'une quelconque des revendications 13 à 16,
**caractérisé en ce que**
les crochets de levage (38) sont escamotables dans la paroi (37) et sont levables et/ou abaissables dans la position escamotée.

18. Dispositif de stockage (1) selon l'une quelconque des revendications 11 à 17,
**caractérisé en ce que**
au moins un dispositif de transport et de levage (23) présente plusieurs segments contigus les uns aux autres dans le sens horizontal, dans lequel des éléments en forme de plaque peuvent être levés et abaissés indépendamment l'un de l'autre.

19. Dispositif de stockage (1) selon l'une quelconque des revendications 11 à 18,
**caractérisé en ce que**
au moins un dispositif de transport et de levage (23) et/ou au moins un parcours de stockage (24) est réalisé de telle manière qu'en variante, un élément en forme de plaque puisse aussi être reçu et transporté, lequel est plus haut que l'étage (29a ; 30a) inférieur,
dans lequel de préférence la/les bande(s) de transport supérieure(s) est/sont escamotable(s) dans une paroi (34 ; 37) du dispositif de transport et de levage (23) et/ou du parcours de stockage (24), qu'en variante un élément en forme de plaque peut être reçu, lequel est plus haut que l'étage (29a ; 30a) inférieur.
